# EUROPEAN PATENT SPECIFICATION

(11) **EP 3 159 072 B1**
(45) Date of publication and mention of the grant of the patent: **16.09.2020**
(21) Application number: 16194824.5
(22) Date of filing: 20.10.2016
(51) Int. Cl.: B21F 23/00, B21D 43/28, B21D 43/20, B21D 43/00, B65G 47/14, B65G 47/92

(54) **APPARATUS FOR FEEDING METAL BARS IN A CONTROLLED NUMBER TO A MANUFACTURING MACHINE**
VORRICHTUNG ZUR ZUFÜHRUNG VON METALLSTANGEN IN EINER KONTROLLIERTEN ANZAHL ZU EINER HERSTELLUNGSMASCHINE
APPAREIL D'ALIMENTATION EN BARRES MÉTALLIQUES EN NOMBRE RÉGULÉ VERS UNE MACHINE DE FABRICATION

(30) Priority: 23.10.2015 IT UB20155189
(43) Date of publication of application: 26.04.2017
(73) Proprietor: Oscam S.r.l., 10127 Torino (IT)
(72) Inventor: PERUZZO, Stefano, I-10127 Torino (IT)
(74) Representative: Frontoni, Stefano

(56) References cited:
- EP-B1- 1 996 348
- EP-B1- 2 268 429
- CN-A- 104 401 726
- DE-A1- 2 456 086
- US-A- 4 548 537

## Description

The present invention relates to apparatuses for feeding metal bars in a controlled number to an operating unit.

The invention may be applied, for example, to apparatuses for cutting and/or bending metal bars to be used for reinforcement of concrete. Some apparatuses make use, for example, of cutting benches in which bars of standard length are cut into desired lengths. Usually a cutting bench basically envisages a resting surface on which the bars are fed to undergo cutting, and cutting equipment set at one end of the bench, for cutting the bars after they have been fed forward on the bench for a desired length. Usually provided upstream of the cutting equipment are means for feeding the bars on the bench. The Italian patent No. IT1360977 filed in the name of the present applicant describes a device for supplying in a completely automatic way a cutting bench of the type referred to above with bars to be cut. The device described in this patent is able to feed the metal bars in a controlled number from a first pick-up position, in which the bars are grouped in a bundle to a second raised position for delivery to the feeding means of the cutting bench.

In the technical field of interest here, apparatuses for machining and treatment of the bars that require loading of the bars according to a feeding movement in a direction transverse to the longitudinal direction of the bars are increasingly widespread.

The above type of loading in fact affords advantages both from the standpoint of reduced use of space, an aspect that is very important for apparatuses that already in themselves present very large overall dimensions, above all on account of the length of the bars that they have to treat, and from the standpoint of simplification that in this way it is possible to obtain in positioning the bars within the apparatus. Consider, in this regard, a bending machine, for which feeding of the bars in the transverse direction makes possible, with relatively simple and far from costly means, a more precise and at the same time faster loading of the bars onto the bending unit of the machine. US4548537A, EP1996348B1, EP2268429B1 may be of interest as technical background of the solution here described.

The object of the present invention is to provide an apparatus for feeding bars that is particularly suitable for providing a supply of the bars that is of a transverse type.

A further object of the invention is to provide an apparatus that will be able to transfer a controlled number of bars.

Yet a further object is to provide an apparatus of the type specified above that will be relatively simple, inexpensive, and reliable in operation.

One or more of the above objects are achieved via an apparatus having the characteristics specified in Claim 1.

The claims form an integral part of the technical teaching provided herein in relation to the invention.

Further characteristics and advantages of the invention will emerge clearly from the ensuing description, with reference to the annexed drawings, which are provided purely by way of non-limiting example and in which:
- Figure 1 is a schematic illustration of a side view of the apparatus described herein according to an embodiment thereof;
   apparatus described herein; and
- Figure 6 is a schematic illustration of a further embodiment of the apparatus described herein.

In the ensuing description, various specific details are illustrated aimed at enabling an in-depth understanding of the embodiments. The embodiments may be provided without one or more of the specific details, or with other methods, components, or materials, etc. In other cases, known structures, materials, or operations are not shown or described in detail so that the various aspects of the embodiment will not be obscured.

The references used herein are provided merely for convenience and hence do not define the sphere of protection or the scope of the embodiments.

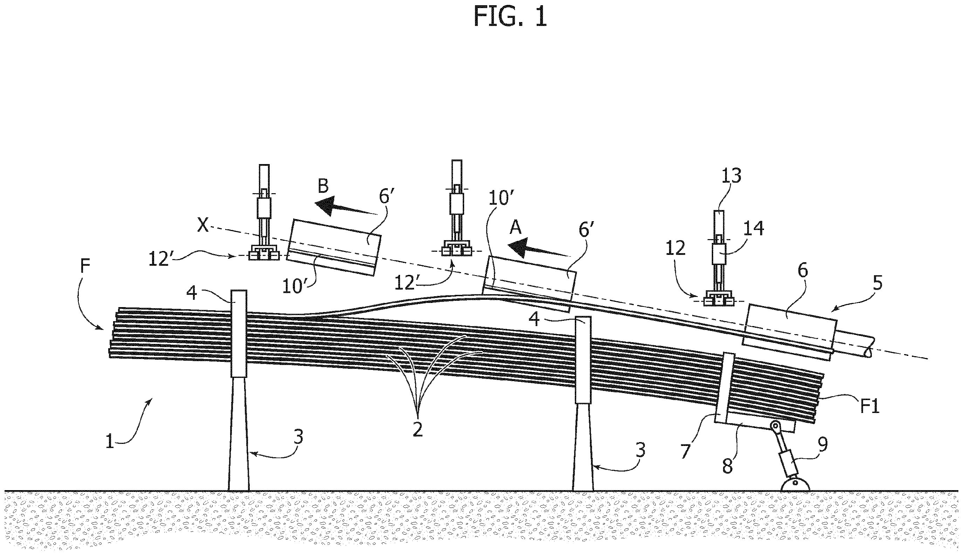

With reference to Figure 1, number 1 designates as a whole a station for storing a bundle F of metal bars 2. In the example illustrated, the station 1 comprises a pair of supporting uprights 3 provided at the top with fork-shaped portions 4, which function as cradle for receiving the bundle F. The bundle F has one end F that projects in cantilever fashion from one of the supports 3. As a result of the weight of the projecting part of the bars, the end F1 bends downwards, as shown schematically in Figure 1.

The machining apparatus to which the bars of the bundle F have to be fed may, for example, be a bending machine (not illustrated) set alongside the bundle F and designed to receive the bars according to an orientation substantially parallel to that of the bars that are grouped in the bundle.

The feeding apparatus described herein has the function of picking up the bars of the bundle F and supplying them in a controlled number to the bending machine in question.

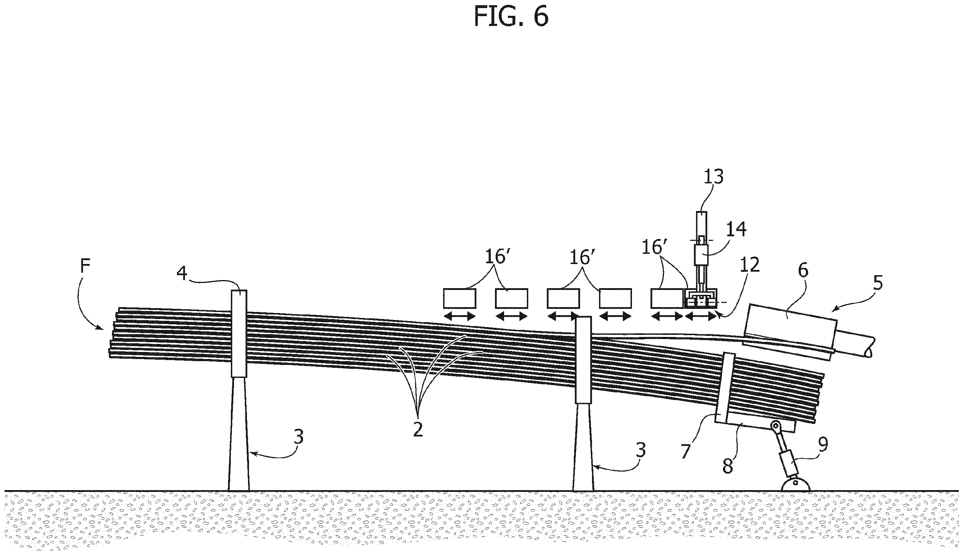

In order to pick up a controlled number of bars from the bundle F, the apparatus described herein comprises a pick-up device 5, including a rotary drum 6, which is made to turn (via motor means not illustrated) about its own axis 6a and is positioned above or alongside the end portion F1 of the bundle of bars. In various preferred embodiments, as in the one illustrated, in order to guarantee that even following upon picking-up of bars from the bundle F the end portion F1 of the bundle will continue to be pressed in contact with the rotary drum 6, the end portion F1 is received in a fork 7 of an oscillating support 8, which is pushed upwards by means of a fluid cylinder 9 so as to press the end portion F1 of the bundle of bars against the bottom part of the rotary drum 6. It should be noted that the condition of the bundle of bars illustrated, in which the bars are set inclined downwards at the ends facing the side of the pick-up device, is not to be considered essential, but rather there may be envisaged embodiments in which the bundle is practically horizontal throughout its length. This inclined condition is, in any case, particularly advantageous in the embodiment illustrated in Figure 6 and described in what follows, where the apparatus described herein comprises unravelling means.

It may moreover be envisaged to impart on the end F1 of the bundle of bars, via the cylinder 9, a movement of oscillation in the vertical direction so as to press the bars against the drum 6 when the magnetic element 10 is close of its lowest position, in front of the bundle of bars, and to move away the bars from the drum when the magnetic element is rotated upwards after one or more bars have been picked up. In this case, it may also be envisaged that the drum will perform angular oscillations to and fro, instead of a continuous rotation.

In theory, it would also be possible to envisage that it is the rotary drum 6 that is constantly pressed downwards against the end F1 of the bundle so as to bend it beyond the configuration that it assumes owing to its own weight in order to obtain the necessary pressure of contact with the bars exploiting the elasticity of the bars themselves.

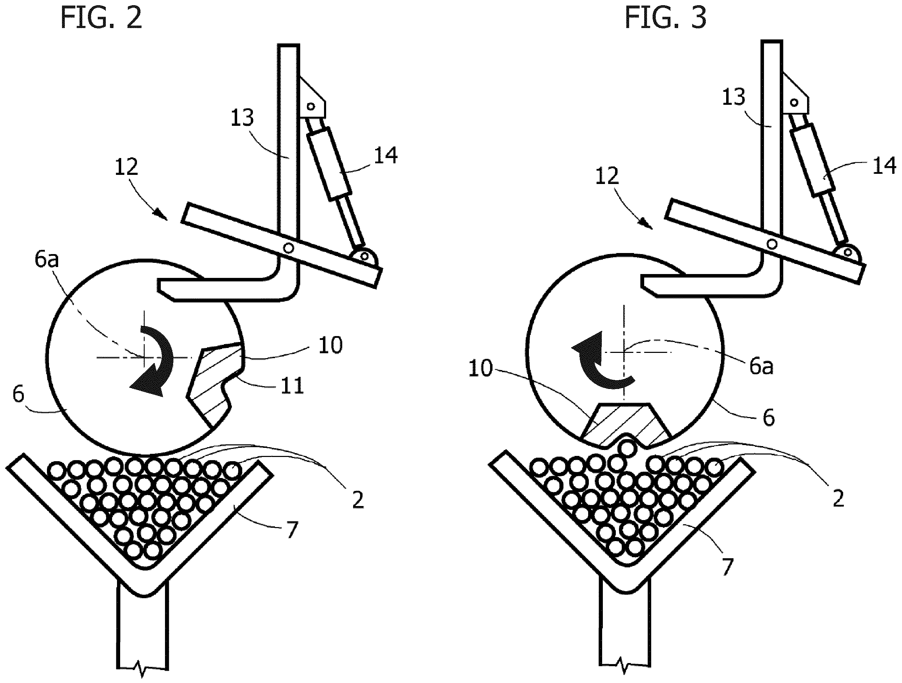

As illustrated schematically in Figure 2, the rotary drum 6 has a magnetic element 10, which is located at the periphery of the rotary drum 6 itself and defines a housing 11 sized for receiving just one bar 2 inside it. It may also be envisaged that the rotary member will have a number of angularly distributed magnetic elements 10, in which case at each turn of rotation of the drum 6 a number of actions of picking-up of the bars will be made equal to the number of magnetic elements provided.

As illustrated in Figure 3, on account of the thrust exerted by the fluid cylinder 9 on the oscillating support 8, the end portion of the bundle of bars F1 is pressed against the bottom part of the rotary drum 6 so that, at each turn of rotation of the drum 6, one bar 2 is captured inside the housing 11 of the magnetic element 10 and forced to turn upwards together with the rotary drum 6, until it is received in the jaws 12 of a lifting device 13.

In the example illustrated, the fork 7 of the oscillating support 8 has a substantially V-shaped configuration (even though different configurations may be adopted, for example a configuration substantially plane or with a slightly parabolic profile) in such a way that the bars 2 are substantially laid flat out on their top layer. The dimensions of the element 7 are such that, even when only a few bars remain inside it, there is no interference between the drum and the support.

Broadly speaking, since the housing 11 is sized for receiving a predetermined number of bars at a time (for example, just one bar) each rotation of the rotary drum entails picking-up of a controlled number of bars (for example, just one bar). On the other hand, it should be considered that an apparatus usually envisages treatment of bars of different diameters. To overcome this drawback, there may be provided, for example, on the rotary drum different magnetic elements each having a housing of different dimensions, which are activated selectively according to the type of bars on which they are to operate.

In any case, the system preferably envisages a counter (not illustrated), for example an optical counter or else a lever-type mechanical counter, which is able to count the bars that pass in front of it, in a position upstream of unloading of the bars into the jaws 12. The means that control activation and de-activation of the magnetic element (for example, the means that supply current to the electromagnet, in the case where the magnetic element is an electromagnet) temporarily de-activate the magnetic element in order to enable unloading, into the jaws 12, of the bar that has been picked up. This can be obtained either by causing interruption of electrical supply to the electromagnet whenever the latter reaches a predetermined position, close to the jaws 12, or using the counter as de-activation sensor, possibly after a pre-determined delay.

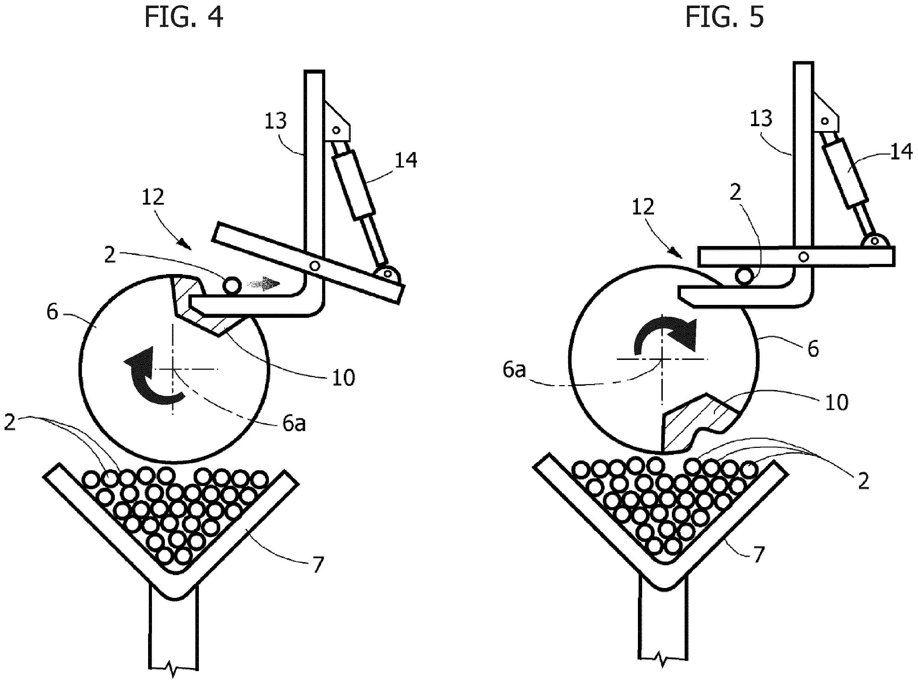

Figure 5 shows the moment when a bar 2 has arrived inside the jaws 12, and the jaws are closed by means of a fluid cylinder 14.

In a particularly simple embodiment, there may be envisaged, in association with the rotary drum 6, a sort of scraper element, which causes dropping of any possible bars that may accidentally have remained adherent to the magnetic element and in excess with respect to the desired number to be picked up at each passage of the magnetic element on the bundle of bars.

In addition, there may be envisaged provision of a number of magnetic elements with respective housings sized on the basis of different bar diameters, these magnetic elements being activated in a selective way according to the type of bars on which they are to operate.

Unloading of any bars that may have been picked up in excess may also be obtained by de-activating the magnetic element following upon the signal received by sensors means for detecting the number of bars that have been picked up. Unloading of the bars that may have accidentally been picked up in excess occurs before the bars are received in the jaws 12. Return of the excess bars into the bundle is obtained by de-activating the magnetic element 10 and possibly reversing rotation of the rotary member.

Finally, it may also be envisaged that the drum 6 will be provided with adjustment means, for example of a mask type, which enable adaptation of the housing associated to the magnetic element to different values of bar diameter.

It should be noted that the magnetic element does not necessarily have to be an electromagnet but alternatively there may also be provided permanent magnets associated to which is a respective mobile mask, which can be actuated so that it shields the corresponding magnetic element, thus de-activating it. In general, then, for the magnetic element or else the drum there may be envisaged a kind of assembly that can be dismantled quickly in order to enable interchangeability with similar elements and render the system easily adaptable to the various applications, for example for picking up bars of different diameter.

The magnetic means may be de-activated both to facilitate release of the bars once they have been picked up in order to deliver them to the feeding means located downstream and to unload any possible excess bars again into the bundle in the case where the desired number of bars has already been reached. Management of the possible excess bars will in any case depend upon the specific circumstances. In the case, for example, where the cycle subsequent to the one that has just been completed envisages feeding of bars of the same type, the bars that have already been picked up can be withheld by the magnetic means until start of the subsequent cycle, without any need to unload them again into the bundle.

The means so far described operate for picking up the end portion of the bar (but, of course, the bars could be picked up in some other point, for example at the centre instead of at the end). It should be noted that the apparatus described herein may be associated to a magazine structure provided with a series of compartments containing bundles of bars of different lengths and/or diameters. In this case, to select the compartment from which to pick up the bars, the apparatus may be mobile along the magazine or else the magazine itself can be carried on a mobile carriage alongside or underneath the apparatus so as to bring the preselected compartment into the pick-up position.

The apparatus described herein moreover has purposely provided means for raising and picking up from the bundle also the remaining part of the bar in order then to be able to feed it in a direction transverse thereto.

In various preferred embodiments, as in the one illustrated, the apparatus described herein has one or more additional drums 6', which are also provided with respective magnetic elements 10', rotatable about respective axes of rotation substantially aligned to the axis of rotation of the drum 6. The number of additional drums may clearly vary according to the requirements of the specific applications. In particular, with bars of small diameter the additional drums may be number four or more.

The drums 6' have the function of engaging corresponding portions of the bar that has already been picked up by the drum 6 and of raising them further as a result of their movement of rotation so that, at the end of the operation carried out by the entire set of the drums 6 and 6', the bar is completely separated from the bundle F.

In particular, the drum 6' set immediately subsequent to the drum 6, has the function of engaging, via its element 10', the portion of the bar that has been picked up by the drum 6, which, as a result of the movement of rotation of the latter, is brought right up to it, and of raising this portion further via its movement of rotation.

This causes also the remaining part of the bar to move right up to the other additional drum 6'. At this point, also the second drum 6' engages, via its magnetic element 10', the immediately corresponding portion and raises the bar from the bundle F so that the bar will be finally completely separated from the bundle.

To be able to carry out the operation referred to above, the drums 6 and 6' clearly have to be synchronised so as to intervene on one and the same bar in succession.

In particular, the first drum 6' must bring its respective magnetic element 10' into a position corresponding to the bar engaged by the drum 6 when the bar has already been sufficiently raised by the drum 6, and, likewise, the second drum 6' must bring its magnetic element 10' into a position corresponding to the bar when the latter has been sufficiently raised also by the first drum 6'. It should moreover be noted that the movement of rotation of the drums 6 and 6' determines not only raising of the bar engaged, but also lateral displacement thereof. Consequently, in operation, the various magnetic elements 10 have to be set in given mutual angular positions that make it possible to follow the aforesaid angular displacement, also taking into account the flexural deformations that the bar may undergo during this step.

In various preferred embodiments, the drums 6 and 6' are controlled by one and the same shaft driven by an electric motor and are mutually oriented according to fixed angular positions, which are determined during a stage of calibration of the apparatus.

In various preferred embodiments, in association with each additional drum 6' jaws 12' are provided of the same type as the jaws 12 described previously, which operate in the same way for receiving the portion of bar that has been separated from the bundle.

The jaws 12 and 12' have the function of feeding the bar that has been separated from the bundle to the manufacturing machine, for example the bending machine mentioned above.

It should be noted that the jaws 12 and 12' can be pre-arranged for receiving a number of bars at a time, and the apparatus can hence be configured for gathering on the jaws a predetermined number of these bars and then supplying them all together to the manufacturing machine. Possibly, the jaws may envisage a vertical adjustment so as to facilitate picking-up of the bars from the various drums 6 and 6' and in such a way as to then position the bars gathered according to a substantially horizontal arrangement.

Instead of the jaws illustrated, the apparatus may, however, also envisage members of some other type, for example a plurality of mobile supports, preferably provided with appropriate grooves for ensuring an orderly arrangement of the bars thereon. In various preferred embodiments, these supports may be constituted by a plurality of screw rotary members. Alternatively, there may also be envisaged roller tracks, or else supports or brackets variously shaped like a U, a V, an L, etc.

In various alternative embodiments, in order to separate completely from the bundle the bar that has been picked up by the drum 6, the apparatus described herein may also envisage, instead of the additional drums 6', unravelling means proper. Figure 6 illustrates an embodiment equipped with the aforesaid means.

In various embodiments, as in the one illustrated, the above unravelling means may be constituted by one or more supports 16' that can slide in a direction substantially parallel to the longitudinal direction of the bars gathered in the bundle, which act on the bar that has been picked up by the drum 6 so as to lift it progressively from the bundle and separate it completely therefrom. These supports may present a fork structure so as to be able to constrain the engaged bars laterally.

It should be noted that the drum 6 could also be set in a central region of the bundle of bars, and in this case the unravelling means comprise sliding supports, which are arranged on both of the opposite sides with respect to the central drum and are mobile in opposite directions starting from the central drum towards the corresponding ends of the bars. Anyway, also in this case, the sliding supports in question perform the same function of progressively raising the bars from the bundle so as to extract them completely therefrom.

In preferred embodiments, the aforementioned sliding supports also have the function of supporting the bars before these are then fed to the manufacturing machine to which they are to be sent. Consequently, the sliding supports in question will have to be in a number such as to enable support of the entire bar as this is raised from the bundle, preventing it from being subject to excessive bending. It is evident that only some of the supports will reach the end of the bar, whereas the others will stop their movement in different positions along the bar, precisely to enable the supporting action mentioned above. Alternatively, a lateral structure may be envisaged, for example a set of jaws or V-shaped or U-shaped supports, etc., onto which the bars are unloaded as the sliding supports unravel them from the bundle.

The bar or bars separated from the bundle may then be sent on to the manufacturing machine directly by the supports, or else there may be envisaged further structures in which the bars separated from the bundle are gathered before they are fed to the manufacturing machine.

Also in this case, however, the machining apparatus is able to pick up and separate from the bundle a controlled number of bars and to load them onto the manufacturing machine according to a supply of bundle a controlled number of bars and to load them onto the manufacturing machine according to a supply of a transverse type.

In this connection, it should be noted that, even though the apparatus described herein has been devised in particular for use with machines that require a loading or feeding of a transverse type, in any case this apparatus can be used also with machines that require a longitudinal feed of the bars or in any case a feed that is only partially transverse.

Finally, the same apparatus can be used not only for picking up bars piled up on one another and gathered in a bundle but also bars set alongside one another in a plane (for the purposes of the present description, also this configuration is in any case to be understood as being a bundle of bars). In this case, the fork 7 mounted on the oscillating support 8 of the embodiment illustrated in the figures may clearly not be provided, and instead there may be envisaged appropriate lateral pusher means or else, for example, chutes, catenaries, or auger conveyors, having the function of moving the bars underneath the pick-up means so as to render always available one bar for picking up. In general, this system with fork 7 on an oscillating support is not, however, essential for the purposes of operation of the apparatus described herein, and the bundle of bars F may be set on any conventional storage structure pre-arranged for maintaining the bars in a horizontal or inclined condition.

Likewise, the manufacturing machine fed by the apparatus in question may also be, instead of a bending machine, a cutting machine, a painting machine, a thread-cutting machine, etc.

## Claims

1. An apparatus for feeding metal bars (2) in a controlled number from a first pick-up position, in which the bars (2) are grouped in a bundle (F), to a second position (T) for delivery to an operating unit, said apparatus comprising at least one rotary pick-up member (6) set above or alongside the bundle of bars (F) and provided with magnetically operating pick-up means (10), which are located in a peripheral position with respect to the axis of rotation (6a) of the pick-up member (6), for engaging the portion of a respective bar in said bundle and raising it into a higher position as a result of the movement of rotation of said rotary member,
said apparatus comprises at least one further mobile member (6'), which is operatively associated to said rotary member for engaging a raised portion of said bar corresponding or adjacent to the portion engaged by said rotary member (6) and is pre-arranged for raising a remaining portion of said bar from said bundle.

2. The apparatus according to Claim 1, wherein said further member is a further rotary pick-up member provided with magnetically operating pick-up means (10) located in a peripheral position with respect to the axis of rotation (6a), which is designed to engage, via said pick-up means, a raised portion of said bar adjacent to the portion engaged by said first rotary member and to raise said adjacent portion of said bar into a higher position as a result of its movement of rotation.

3. The apparatus according to Claim 2, wherein said further rotary member (6') is mounted so that it can turn about an axis of rotation substantially aligned to the axis of rotation of said first rotary member.

4. The apparatus according to Claim 3, wherein the axes of rotation of said rotary members are inclined upwards or downwards with respect to an ideal reference horizontal line, which, starting from the first rotary member, is directed towards the subsequent rotary members.

5. The apparatus according to Claim 1, wherein said further member is at least a supporting member that is designed to receive said adjacent or corresponding raised portion of said bar and is mobile in a direction coinciding with the longitudinal direction of said bundle in such a way that the movement of sliding of said member will determine raising of a remaining part of said bar from said bundle.

6. The apparatus according to Claim 1, wherein said rotary members (6, 6') are in the form of a rotary drum, and said magnetically operating pick-up means are constituted by at least one magnetic element (10), which is carried by the structure of the drum (6, 6') and defines a housing for receiving the bars (2) facing the peripheral surface of the drum (6, 6').

7. The apparatus according to Claim 6, wherein the magnetic element (10) can be de-activated.

8. The apparatus according to Claim 6, wherein the housing has a cross section sized for containing not more than one bar.

9. The apparatus according to any one of Claims 6, 7, and 8, wherein said drums (6, 6') are each provided with a plurality of magnetic elements (10), which are angularly distributed around the periphery of the drum and can be activated and de-activated as desired, and wherein the number of said magnetic elements is the same for all the drums (6, 6').

10. The apparatus according to Claim 9, **characterized in that** at least some of said magnetic elements (10) have housings sized for different ranges of bar diameter.

11. The apparatus according to any one of the preceding claims, wherein sensor/counter means (15) are provided designed to count the bars that have been picked up.

12. The apparatus according to Claim 11, wherein said sensor/counter means (15) are designed to count the bars that have been picked up at each passage of the first rotary pick-up member.

13. The apparatus according to Claim 11, wherein control means are provided that cause return, into the bundle, of the bars in excess detected by said sensor/counter means before they reach the unloading area.

14. The apparatus according to any one of the preceding claims, wherein said rotary member and said additional rotary members have their respective magnetically operating pick-up means set in angular positions that are mutually staggered from one member to the next in such a way that they will engage said bar in succession.

15. The apparatus according to Claim 14, wherein said rotary member and said additional rotary members are all driven in rotation by one and the same shaft.

16. The apparatus according to any one of the preceding claims, wherein said apparatus is associated to a magazine having a plurality of bundles of bars, and wherein said rotary member (6) and said additional rotary members (6') are all mounted on a mobile carriage to enable selection of the bundle in said magazine from which to pick up the bars, or else wherein said apparatus is associated with a magazine, which has a plurality of bundles of bars and is mobile with respect to said apparatus.

## Patentansprüche

1. Vorrichtung zur Zuführung von Metallstangen (2) in einer kontrollierten Anzahl von einer ersten Aufnahmeposition, in der die Stangen (2) in einem Bündel (F) gruppiert sind, in eine zweite Position (T) zur Lieferung an eine Betriebseinheit, wobei die Vorrichtung mindestens ein Drehaufnahmeteil (6), das oberhalb von oder neben dem Bündel (F) von Stangen platziert ist, umfasst und mit magnetisch arbeitenden Aufnahmemitteln (10) versehen ist, die sich in einer peripheren Position relativ zur Drehachse (6a) des Aufnahmeteils (6) befinden, um in einen Abschnitt einer jeweiligen Stange des Bündels einzugreifen und sie in eine höhere Position anzuheben als Ergebnis der Bewegung der Drehung des Drehteils,
wobei die Vorrichtung mindestens ein weiteres bewegliches Teil (6'), das operativ mit dem Drehteil verbunden ist, um in einen angehobenen Abschnitt der Stange einzugreifen, der dem Abschnitt entspricht oder nebengeordnet ist, in den das Drehteil (6) eingreift, und das dazu vorangeordnet ist, einen verbleibenden Abschnitt der Stange aus dem Bündel anzuheben.

2. Vorrichtung nach Anspruch 1, wobei das weitere Teil ein mit magnetisch arbeitenden Aufnahmemitteln (10), die sich in einer peripheren Position relativ zur Drehachse (6a) befinden, versehenes weiteres Drehaufnahmeteil ist, das dazu ausgebildet ist, über die Aufnahmemittel in einen angehobenen Abschnitt der Stange einzugreifen, der dem Abschnitt, in den das erste Drehteil eingreift, nebengeordnet ist, und den nebengeordneten Abschnitt der Stange in eine höhere Position anzuheben als Ergebnis seiner Drehbewegung.

3. Vorrichtung nach Anspruch 2, wobei das weitere Drehteil (6') so montiert ist, dass es sich um eine Drehachse drehen kann, die mit der Drehachse des ersten Drehteils ausgerichtet ist.

4. Vorrichtung nach Anspruch 3, wobei die Drehachsen der Drehteile auf- oder abwärts geneigt sind relativ zu einer idealen horizontalen Referenzlinie, die, ausgehend von dem ersten Drehteil, zu den nachfolgenden Drehteilen gerichtet ist.

5. Vorrichtung nach Anspruch 1, wobei das weitere Teil mindestens ein tragendes Teil ist, das dazu ausgebildet ist, den nebengeordneten oder entsprechenden angehobenen Abschnitt der Stange aufzunehmen, und in eine Richtung beweglich ist, die mit der Längsrichtung des Bündels derart zusammenfällt, dass die Gleitbewegung des Teils das Anheben eines verbleibenden Stücks der Stange aus dem Bündel bestimmt.

6. Vorrichtung nach Anspruch 1, wobei die Drehteile (6, 6') als Drehtrommel ausgeformt sind und die magnetisch arbeitenden Aufnahmemittel aus mindestens einem magnetischen Element (10) bestehen, das von der Struktur der Trommel (6, 6') getragen ist und ein Gehäuse zum Empfangen der Stangen (2), das der Umfangsoberfläche der Trommel (6, 6') zugewandt ist, definiert.

7. Vorrichtung nach Anspruch 6, wobei das magnetische Element (10) deaktiviert werden kann.

8. Vorrichtung nach Anspruch 6, wobei das Gehäuse einen Querschnitt zum Beinhalten nicht mehr als eine Stange aufweist.

9. Vorrichtung nach einem der Ansprüche 6, 7 und 8, wobei die Trommeln (6, 6') jeweils mit einer Mehrzahl von magnetischen Elementen (10) versehen sind, die winkelmäßig um die Peripherie der Trommel verteilt sind und beliebig aktiviert und deaktiviert werden können, und wobei die Anzahl der magnetischen Elemente für alle Trommel (6, 6') gleich ist.

10. Vorrichtung nach Anspruch 9, **dadurch gekennzeichnet, dass** mindestens einige der magnetischen Elemente (10) Gehäuse aufweisen, die für verschiedene Stangendurchmesserspannweiten dimensioniert sind.

11. Vorrichtung nach einem der vorangehenden Ansprüche, wobei Abtast-/Zählmittel (15) vorgesehen sind, die dazu ausgebildet sind, die aufgenommenen Stangen zu zählen.

12. Vorrichtung nach Anspruch 11, wobei die Abtast-/Zählmittel (15) dazu ausgebildet sind, die aufgenommenen Stangen bei jedem Durchgang des ersten Drehaufnahmeteils zu zählen.

13. Vorrichtung nach Anspruch 11, wobei Steuerungsmittel vorgesehen sind, die eine Rückkehr der von den Abtast-/Zählmittel detektierten überflüssigen Stangen in den Bündel bewirken, bevor sie den Ausladebereich erreichen.

14. Vorrichtung nach einem der vorangehenden Ansprüche, wobei die Drehteile und die zusätzlichen Drehteile weisen ihre jeweiligen magnetisch arbeitenden Aufnahmemittel in winkelmäßigen Positionen auf, die gegenseitig von einem Teil zum nächsten derart versetzt sind, dass die in der Stange nacheinander ineinander eingreifen werden.

15. Vorrichtung nach Anspruch 14, wobei die zusätzlichen Drehteile durch eine und dieselbe Welle in Drehung versetzt werden.

16. Vorrichtung nach einem der vorangehenden Ansprüche, wobei die Vorrichtung mit einem Magazin verbunden ist, das eine Mehrzahl von Bündeln von Stangen aufweist, und wobei das Drehteil (6) und die zusätzlichen Drehteile (6') alle auf einem beweglichen Träger montiert sind, um ein Auswählen des Bündels in dem Magazin zu ermöglichen, von dem die Stangen aufzunehmen sind, oder sonst wobei die Vorrichtung mit einem Magazin verbunden ist, das eine Mehrzahl von Bündeln von Stangen aufweist und relativ zu der Vorrichtung beweglich ist.

## Revendications

1. Appareil pour approvisionner des barres métalliques (2) en nombre contrôlé, d'une première position de saisie dans laquelle les barres (2) sont regroupées en un faisceau (F) à une deuxième position (T), pour la distribution à une unité d'exploitation, ledit appareil comprenant au moins un organe de saisie rotatif (6), établi au-dessus ou le long du faisceau de barres (F) et pourvu de moyens de saisie à fonctionnement magnétique (10) qui sont situés dans une position périphérique par rapport à l'axe de rotation (6a) de l'organe de saisie (6), pour se mettre en prise avec la portion d'une barre respective dans ledit faisceau, la soulevant dans une position plus élevée à la suite du mouvement de rotation dudit organe rotatif,
ledit appareil comprend au moins un organe mobile (6') supplémentaire, qui est associé fonctionnellement audit organe rotatif, pour se mettre en prise avec une portion soulevée de ladite barre correspondant ou adjacente à la portion en prise avec l'organe rotatif (6) et qui est pré-agencé pour soulever une portion restante de ladite barre provenant dudit faisceau.

2. Appareil selon la revendication 1, dans lequel ledit organe supplémentaire est un organe de saisie rotatif supplémentaire, pourvu de moyens de saisie à fonctionnement magnétique (10) situés dans une position périphérique par rapport à l'axe de rotation (6a), qui est conçu pour se mettre en prise, via lesdits moyens de saisie, avec une portion soulevée de ladite barre adjacente à la portion en prise avec ledit premier organe rotatif et pour soulever ladite portion adjacente de ladite barre à une position plus élevée à la suite de son mouvement de rotation.

3. Appareil selon la revendication 2, dans lequel ledit organe rotatif supplémentaire (6') est monté de manière à pouvoir tourner autour d'un axe de rotation sensiblement aligné à l'axe de rotation dudit premier organe rotatif.

4. Appareil selon la revendication 3, dans lequel les axes de rotation desdits organes rotatifs sont inclinés vers le haut ou vers le bas par rapport à une ligne horizontale de référence idéale, qui, partant du premier organe rotatif, est dirigée vers les organes rotatifs suivants.

5. Appareil selon la revendication 1, dans lequel ledit organe supplémentaire est au moins un organe de support qui est conçu pour recevoir ladite portion soulevée adjacente ou correspondante de ladite barre et est mobile dans une direction coïncidant avec la direction longitudinale dudit faisceau de telle sorte que le mouvement de coulissement dudit organe déterminera le soulèvement d'une partie restante de ladite barre provenant dudit faisceau.

6. Appareil selon la revendication 1, dans lequel lesdits organes rotatifs (6, 6') se présentent sous la forme d'un tambour rotatif, et lesdits moyens de saisie à fonctionnement magnétique se composent d'au moins un élément magnétique (10), qui est porté par la structure du tambour (6, 6') et définit un logement pour recevoir les barres (2) faisant face à la surface périphérique du tambour (6, 6').

7. Appareil selon la revendication 6, dans lequel l'élément magnétique (10) peut être désactivé.

8. Appareil selon la revendication 6, dans lequel le logement a une section transversale dimensionnée pour ne pas contenir plus d'une barre.

9. Appareil selon l'une quelconque des revendications 6, 7, et 8, dans lequel lesdits tambours (6, 6') sont chacun pourvus d'une pluralité d'éléments magnétiques (10), qui sont répartis angulairement autour de la périphérie du tambour et peuvent être activés et désactivés comme souhaité, et dans lequel le nombre desdits éléments magnétiques est le même pour tous les tambours (6, 6').

10. Appareil selon la revendication 9, **caractérisé en ce qu'**au moins certains desdits éléments magnétiques (10) ont des logements dimensionnés pour différentes plages de diamètre de barre.

11. Appareil selon l'une quelconque des revendications précédentes, dans lequel des moyens de détection/comptage (15) sont prévus, conçus pour compter les barres qui ont été saisies.

12. Appareil selon la revendication 11, dans lequel lesdits moyens de détection/comptage (15) sont conçus pour compter les barres qui ont été saisies à chaque passage du premier organe de saisie rotatif.

13. Appareil selon la revendication 11, dans lequel des moyens de contrôle sont prévus pour provoquer le retour, dans le faisceau, des barres en excès détectées par lesdits moyens de détection/comptage avant qu'elles n'atteignent la zone de déchargement.

14. Appareil selon l'une quelconque des revendications précédentes, dans lequel ledit organe rotatif et lesdits organes rotatifs en plus ont leurs moyens de saisie à fonctionnement magnétique respectifs établis dans des positions angulaires qui sont mutuellement décalées entre un organe et un organe suivant de telle sorte qu'ils se mettront en prise avec ladite barre successivement.

15. Appareil selon la revendication 14, dans lequel ledit organe rotatif et lesdits organes rotatifs en plus sont tous entraînés en rotation par un seul et même arbre.

16. Appareil selon l'une quelconque des revendications précédentes, dans lequel ledit appareil est associé à un magasin ayant une pluralité de faisceaux de barres, et dans lequel ledit organe rotatif (6) et lesdits organes rotatifs en plus (6') sont tous montés sur un chariot mobile pour permettre la sélection du faisceau dans ledit magasin à partir duquel les barres sont saisies, ou bien dans lequel ledit appareil est associé à un magasin qui a une pluralité de faisceaux de barres et qui est mobile par rapport audit appareil.
